Europäisches Patentamt

European Patent Office

Office européen des brevets

(11) Veröffentlichungsnummer: **0 307 615**
**A2**

(12) **EUROPÄISCHE PATENTANMELDUNG**

(21) Anmeldenummer: 88112918.3

(51) Int. Cl.⁴: **G01M 3/16 , G01M 3/40**

(22) Anmeldetag: 09.08.88

(30) Priorität: 16.09.87 DE 3731072

(43) Veröffentlichungstag der Anmeldung:
22.03.89 Patentblatt 89/12

(84) Benannte Vertragsstaaten:
**AT BE CH DE ES FR GB GR IT LI LU NL SE**

(71) Anmelder: **Luber, Willibald**
**Haselbrunnenweg 23**
**D-7060 Schorndorf(DE)**

(72) Erfinder: **Luber, Willibald**
**Haselbrunnenweg 23**
**D-7060 Schorndorf(DE)**

(54) **Vorrichtung zur zerstörungsfreien Ermittlung von Schäden an Abdichtungen von Brücken, Wannen und Flachdächern.**

(57) Die Vorrichtung ermöglicht es, zerstörungsfreie Überprüfungen von Abdichtungen durchzuführen. Sie ist insbesondere geeignet, wenn bei Undichtigkeiten eine flächenmäßige Ausbreitung der Benetzung des abgedichteten Bauteiles möglich ist.

Ihr Einsatz erfolgt besonders bei Abdichtungen gegen Tagwasser, Salzwasser oder sonstige schadstoffhaltige Wässer oder Abwässer, für die eine Kontrolle, z.B. Absickerung in das Grundwasser, erforderlich ist. Sie besitzt auch den Vorteil, daß sie nach der allgemeinen Schadensanzeige auch die Lokalisierung des Schadens ermöglicht.

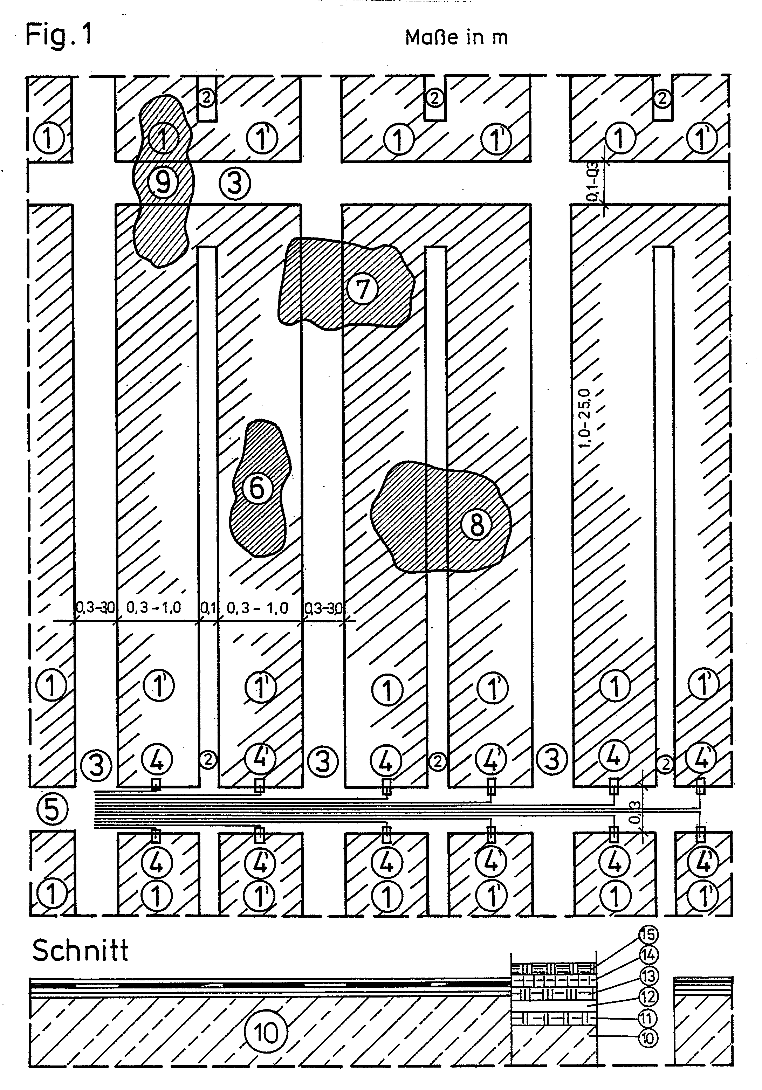

Fig. 1    Maße in m

Schnitt

EP 0 307 615 A2

## Vorrichtung zur zerstörungsfreien Ermittlung von Schäden an Abdichtungen von Brücken, Wannen und Flachdächern.

Die Erfindung betrifft eine Vorrichtung zur Ermittlung von Schäden an flächenhaften Abdichtungen gegen Wasser, Salzwasser oder sonstige elektrisch leitfähige Flüssigkeiten bei Brücken und Flachdächern, Auffang- und Grundwasserwannen oder dergl., bei der flächenhafte, elektrisch schwach leitfähige, örtlich hergestellte Streifen, zwischen dem abzudichtenden Bauwerk und der Abdichtungsschicht selbst, aufgebracht werden, die derart verbunden sind, daß eine Lokalisierung des Schadensbereiches in einer größeren Fläche von außen möglich ist. Um die, wenn auch geringe, Leitfähigkeit des Betons auszuschalten, werden die Streifen auf eine elektrisch isolierende Schicht, die unmittelbar auf das abzudichtende Bauwerk aufgebracht ist, aufgelegt.

Bei einer derartigen bekannten Vorrichtung wird ein elektrischer Leiter in Form eines elektrisch leitenden Voranstriches zwischen der abzudichtenden Fläche und der Dichtungsschicht angeordnet (deutsche Offenlegungsschrift 24 46 979). Durch Abtasten der Abdichtungsschicht mit einer Suchelektrode können etwaige Fehler in der Abdichtung festgestellt werden, in dem an den Fehlstellen Funkendurchschläge stattfinden. Dieses Verfahren funktioniert nur, wenn die abzudichtende Fläche aus Stahl besteht (z.B. bei der Tankbeschichtung) und die zu prüfende Fläche zugänglich ist. Bei einer weiteren Vorrichtung ( DE 29 21 250 C2) werden für die Kontrolle Leiter eingelegt, die entweder durch eine zunehmende Zersetzung des Leiters bei Wasser oder Salzwasserzutritt einen Schaden anzeigen oder dadurch, daß der Widerstand zwischen den Leiterbändern abnimmt.

Die vorgenannte Vorrichtung hat gegenüber der erfindungsgemäßen noch den Nachteil, daß die Leiterbänder sehr eng liegen müssen. Je enger dieser Abstand gehalten wird, umso früher wird der Schaden erkannt. Weitere Nachteile sind noch, daß die Leiterbänder paarweise verlegt sein müssen, um eine Funktionskontrolle über den Stromdurchgang zu haben, daß der Bereich, den das Bänderpaar umschließt sich der Kontrolle entzieht und daß nach Zersetzung des Leiters keine Kontrolle mehr möglich ist.

Die zu lösende Aufgabe besteht somit in der Schaffung einer Vorrichtung, die neben einer schnellen Schadensanzeige die vogenannten Mängel nicht mehr besitzt.

Die Lösung dieser Aufgabe ergibt sich aus dem Kennzeichnungsteil des Anspruches 1.

Die so parzellierten Leiterflächen werden mit Anschlußkontakten von einer Stelle außerhalb überprüft. Die anfänglich schwache Leitfähigkeit der Kunststoffschicht wird durch die Wasser- oder besonders bei Salzwasserbenetzung durch der damit verbundenen Leiterquerschnittsvergrößerung und die gute Leitfähigkeit des Wassers bzw. Salzwassers oder einer sonstigen elektrisch leitfähigen Flüssigkeit im Schadensbereich stark vergrößert. Diese Zunahme kann dann mit einem Leitfähigkeits- oder Widerstandsmeßgerät jederzeit von außen festgestellt werden. Da diese leitfähige Kunststoffschicht gegen Wasser und Salzwasser sowie gegen viele in in diesem Zusammenhang relevanten wässerigen Lösungen resistent ist, ist sie praktisch auch über die Schadensanzeige hinaus brauchbar.

Der entscheidende Vorteil gegenüber der Vorrichtung nach dem Patent DE 29 21 250 C2 liegt also darin, daß dieses Verfahren keine nicht mehr erfaßbaren Flächen mehr hat, da der Leiter zur Einspeisung des Meßstromes die Kontrollfläche selbst ist, kein Trägergewebe zur Arretierung der Meßstromleiter mehr benötigt wird und eine Schädigung des Kontrollsystems durch Zersetzung wegen seiner hohen Resistenz gegen die häufigsten Lösungen auszuschließen ist. Die Erfindung wird an Hand der Figur 1 in einem nachstehenden Beispiel beschrieben.

Tritt durch die Abdichtung (15) eine elektrisch leitfähige Flüssigkeit, so wird diese über die sehr dünne Abdeckung der Kontrollschicht mit dieser selbst in Verbindung kommen und sich verbreiten. Je nach Lage der undichten Stelle kann dann eine Benetzungsfläche entsprechned den Darstellungen ( 6, 7, 8, 9 ) entstehen. Bei den Schadensstellen nach Ziffer(6)und(8)wird die Flüssigkeit die schwach leitende Schicht aus Flüssigkunststoff (1,13) im Benetzungsbereich leitfähiger machen. Wird nun Meßstrom vom Kontrollschrank über die Verbindungsleitungen zum Kontakt (4) über die Kontrollfläche(1)und(1´) nach 4´, von dort zurück an das Meßgerät geleitet, so kann die Zunahme der Leitfähigkeit dieser Kontrollfläche mit dem Vergleich zur ersten Messung, durchgeführt bei der noch intakten Abdichtung, festgestellt werden. Bei den Schadensstellen (7) und (9) ist zusätzlich noch eine Verbindung der Kontrollflächen nachzuweisen.

Beschreibung zur Figur 1

(1) Kontrollflächen, aus leitfähigem Kunststoff hergestellt.
(2) Zwischenraum, der die Kontrollfläche zu einer Schlaufe werden läßt.
(3) Raum zwischen den Kontrollflächen.
(4) Anschlußfahnen.
(5) Verbindungsleitungen von den Anschlußfahnen der Kontrollflächen zum Kontrollschrank.

(6)     )
(7)     ) Benetzungsflächen auf den Kontrollflächen, wie
(8)     ) sie sich bei undichter Abdichtung einstellen
(9)     ) können.

(10) Abzudichtender Bauteil , z.B. Beton.
(11) Haftgrundierungsschicht.
(12) Elektrisch isolierende Schicht.
(13) Kontrollschicht aus leitfähigem Flüssigkunststoff.
(14) Abdeckung der Kontrollschicht.
(15) Abdichtung.

## Ansprüche

1. Vorrichtung zur zerstörungsfreien Ermittlung von Schäden an Abdichtungen von Brücken, Flachdächern, Grundwasser- oder Auffangwannen aus Beton, Stahl, Holz oder sonstigen Baustoffen, bei dem eine elektrisch leitfähige Schicht aus Flüssigkunststoff zwischen das abzudichtende Bauwerk und seine Abdichtung aufgebracht ist, dadurch gekennzeichnet, daß diese durch Unterbrechungen so aufgeteilt ist, daß parzellierte, schlaufenähnliche Flächen entstehen, die gleichzeitig Meßstromleiter und Kontrollfläche sind.

2. Vorrichtung nach Anspruch 1, dadurch gekennzeichnet, daß die leitfähige Schicht auf eine elektrisch isolierende Schicht aufgebracht ist, die verhindert, daß der Meßstrom in das abzudichtende Bauteil eindringt.

3. Vorrichtung nach Anspruch 1 und 2, dadurch gekennzeichnet, daß zur Variierung der Leitfähigkeit in die leitfähige Schicht aus Flüssigkunststoff Kohlefäden eingelegt sind.

4. Vorrichtung nach den Ansprüchen 1 bis 3, dadurch gekennzeichnet, daß die leitfähige Flüssigkunststoffschicht und die elektrisch isolierende Schicht aus risseüberbrückendem (bis 2mm) Material bestehen.

5. Vorrichtung nach den Ansprüchen 1 bis 4, dadurch gekennzeichnet, daß die Kontrollflächen einschl. der elektrisch isolierenden Schicht aus vorgefertigten Bahnen bestehen.

# Fig.1

Maße in m

## Schnitt